# EUROPEAN PATENT APPLICATION

(11) **EP 4 131 583 A1**
(43) Date of publication of application: **08.02.2023**
(21) Application number: 21925164.2
(22) Date of filing: 09.02.2021
(51) Int. Cl.: H01M 10/6557

(54) **BATTERY, AND ASSOCIATED POWER DEVICE, PREPARATION METHOD AND PREPARATION DEVICE**

(71) Applicant: Contemporary Amperex Technology Co., Limited, Fujian PRC 352100 (CN)
(72) Inventor: WANG, Lei, Ningde, Fujian 352100 (CN); QIN, Feng, Ningde, Fujian 352100 (CN); WANG, Peng, Ningde, Fujian 352100 (CN); LI, Jinfeng, Ningde, Fujian 352100 (CN); WANG, Liangyi, Ningde, Fujian 352100 (CN)
(74) Representative: Gong, Jinping
(86) International application number: PCT/CN2021/076287
(87) International publication number: WO 2022/170491

(57) **Abstract**

Disclosed is a battery, which includes at least two layers of battery units, each layer of battery units includes a plurality of battery cells arranged in an array, the battery cells having an arc-shaped outer wall, and the each layer of battery units has a wavy shape; and a thermal management component positioned between the at least two layers of battery units, the thermal management component having a wavy shape corresponding to the wavy shape of the each layer of battery units. The thermal management component is used for providing support to the at least one layer of battery units in a gravitational direction and a first direction. The gravitational direction intersects with the first direction. The thermal management component is provided with a reinforcing structure for providing further support to the at least one layer of battery units in the first direction. The battery can improve the overall structural strength of the battery.

## Description

### TECHNICAL FIELD

The present application relates to the field of batteries, in particular to a battery and a related electrical device, a preparation method and a preparation device of the battery.

### BACKGROUND

Batteries are widely used in electronic equipment, electric vehicles, electric toys and electric equipment, such as mobile phones, notebook computers, battery cars, electric cars, electric planes, electric ships, electric toy cars, electric toy ships, electric toy planes and electric tools, etc. In the development of battery technology, besides improving the performance of the batteries, the service life and safety are also problems that cannot be ignored. If the service life of the batteries does not reach the expected time, the maintenance and use cost of the batteries will be very high. If the safety of the battery cannot be guaranteed, the batteries cannot be used. Therefore, how to prolong the service life and enhance the safety of the batteries is an urgent technical problem to be solved in battery technology.

### SUMMARY

The present application provides a battery and a related electrical device, a preparation method and a preparation device of the battery, so as to improve an overall structural strength of the battery.

According to the first aspect of the present application, provided is a battery, which includes at least two layers of battery units and a thermal management component. Each of the at least two layers of battery units includes a plurality of battery cells arranged in an array, wherein the battery cells have an arc-shaped outer wall and each layer of battery units has a wavy shape. The thermal management component is positioned between the at least two layers of battery units, the thermal management component has a wavy shape corresponding to the wavy shape of the each layer of battery units, and is configured for providing support to at least one layer of battery units in a gravitational direction and a first direction, the gravitational direction intersecting with the first direction. The thermal management component is provided with a reinforcing structure for providing further support to the at least one layer of battery units in the first direction.

In this embodiment, the thermal management component is provided with the reinforcing structure that provides further support to the at least one layer of battery units in the first direction. The first direction intersects with the gravitational direction. That is to say, the thermal management component supports the at least one layer of the battery units along the gravitational direction by wavy concave surfaces, it can also provide support to the at least one layer of battery units in a non-gravitational direction, so that the thermal management component of the present application can support the battery unit in the two directions, thereby enabling the thermal management component of the present application to have better support strength. By improving the support strength of the thermal management component, the stability of an overall structure of the battery of the present invention will be better.

In some embodiments, an angle α at which the gravitational direction intersects with the first direction is set to 0°< α ≤ 90°.

In this embodiment, the thermal management component can provide support in a direction intersecting with the gravitational direction, or even in a direction perpendicular to the gravitational direction, such that the battery cells can be surrounded in a wider range and stable support can be provided for each battery cell.

In some embodiments, the thermal management component includes a first plate portion and a second plate portion. The first plate portion has a wavy shape and is configured for supporting the at least one layer of battery units. The second plate portion has a wavy shape and is arranged opposite to the first plate portion. The first plate portion and/or the second plate portion are formed with thickened portions toward an interior of the thermal management component, and the thickened portions constitute the reinforcing structure.

In this embodiment, the thickened portion of the first plate portion and the thickened portion of the second plate portion are abutted, so that support strength of the thermal management component to upper-layer battery cells can be improved through the thickened portions, thereby ensuring the stability of the overall structure of the battery.

In some embodiments, the thermal management component includes a first plate portion and a second plate portion. The first plate portion has a wavy shape and is configured for supporting the at least one layer of battery units. The second plate portion has a wavy shape and is arranged opposite to the first plate portion. The first plate portion and/or the second plate portion are formed with abutting portions, the first plate portion and the second plate portion are abutted by the abutting portions, and the abutting portions constitute the reinforcing structure.

In this embodiment, the abutting portion of the first plate portion and the abutting portion of the second plate portion are abutted, so that the support strength of the thermal management component to the upper-layer battery cells can be improved through the abutting portions, and the abutting portions can also support the upper-layer battery cells by means of lower-layer battery cells or even a battery frame, thereby further improving the stability of the overall structure of the battery.

In some embodiments, the thermal management component includes a plurality of reinforcing structures that extend in a column direction and are spaced in a row direction.

In this embodiment, each layer of battery units includes a plurality of battery cells arranged in an array, and the plurality of battery cells are arranged in the column direction and the row direction, and the formed plurality of reinforcing structures can further improve the support strength of the thermal management component to the battery units in the battery.

In some embodiments, fluid passages extending in the column direction are formed between adjacent reinforcing structures, and the fluid passages are isolated from each other in the row direction for thermal management of the battery.

In this embodiment, the thermal management component has a wavy shape corresponding to the wavy shape of each layer of battery units. In this way, a shape of the fluid passage can be configured to match an outer wall of the battery cells, so that a contact area between the fluid passages and the battery cells can be increased. The larger the contact area between the fluid passages and the battery cells, the better the effect of cooling or heating the battery cells by a fluid passing through the fluid passages. Moreover, although the whole thermal management component is in a wavy shape and a cross-sectional shape of the fluid passage is also irregular, the fluid passages are direct fluid passages along the column direction, which can maintain the fastest flow speed under complex shape to improve the heat transfer efficiency.

In some embodiments, the column direction is perpendicular to the gravitational direction, the battery cells of the upper-layer battery units are located directly above lower-layer fluid passages, the battery cells of lower-layer battery units are located directly below upper-layer fluid passages, and the adjacent reinforcing structures are symmetrically disposed on two sides of the corresponding battery cells.

In this embodiment, it is possible to minimize a distance between adjacent battery cells in the row direction, and they can even contact each other, making two layers of battery cells in a vertical direction interlaced with each other. In this way, a layout distance of a plurality of battery cells in the row direction and a layout distance of the two-layer battery cells in the vertical direction are reduced, thereby greatly improving an energy density of the battery. Moreover, such an arrangement not only increases the amount of fluid in the fluid passages, but also increases fitting surfaces between the fluid passages and the surfaces of the battery cells, thereby maximizing the heat exchange efficiency of the thermal management component.

In some embodiments, heat dissipation fins are formed on inner walls of the fluid passages, and the heat dissipation fins extend in the column direction.

In this embodiment, a contact area between the fluid and the inner walls of the fluid passages can be increased by arranging the heat dissipation fins, thereby further improving the efficiency of heat exchange.

In some embodiments, the thermal management component further includes a first flow collection member and a second flow collection member. The first flow collection member is arranged at one side in the column direction and is fixedly connected with the first plate portion and the second plate portion, wherein an inlet end of each of the fluid passages is communicated with the first flow collection member. The second flow collection member is arranged on the other side in the column direction and is fixedly connected with the first plate portion and the second plate portion, wherein an outlet end of each of the fluid passages is communicated with the second flow collection member. A first water inlet is formed on the first flow collection member, and a first water outlet is formed on the second flow collection member, the first water inlet and the first water outlet being located at two ends in the row direction.

In this embodiment, the first water inlet and the first water outlet can be formed at diagonal positions, so that a flow path of the fluid passing through the first water inlet and the first water outlet is the longest flow path, and the longest flow path can improve a contact range and time of the fluid and the battery cells, thereby improving the effective heat exchange between the thermal management component and the battery cells.

In some embodiments, a plurality of water inlets are formed at intervals along the row direction on the first flow collection member, and a plurality of water outlets corresponding to the respective water inlets are formed at intervals along the row direction on the second flow collection member.

In the embodiment, the flow path of the fluid in the fluid passages can be shortened, so that the fluid in the fluid passages can be quickly discharged after heat exchange, so as to ensure the stability of the heat exchange efficiency and further improve the heat exchange efficiency between the thermal management component and the battery cells.

According to the second aspect of the present application, provided is an electrical device including the battery according to the above, the battery being configured for providing electrical energy.

According to the third aspect of the present application, provided is a preparation method of a battery.

According to the fourth aspect of the present application, provided is a preparation device of a battery.

Based on the shape and connection arrangement of battery cells of a battery, the battery and the related electrical device, the preparation method and the preparation device of the battery provided in the present application can make full use of the outer surface shape of the battery cells, and provide a thermal management component that also has a support function, thus improving the support strength, heat dissipation efficiency and energy density of the battery.

### BRIEF DESCRIPTION OF DRAWINGS

The accompanying drawings, which are illustrated herein, serve to provide a further understanding for the present application and form a part of the present application, and the exemplary embodiments of the present application as well as the illustrations thereof serve to explain the present application and do not constitute an undue limitation of the present application. In the accompanying drawings:
FIG. 1 is a schematic structural diagram of a battery according to some embodiments of the present application;
FIG. 2 is a sectional structural schematic diagram of the battery shown in FIG. 1 in a B-B direction;
FIG. 3 is a partial structural schematic diagram of a thermal management component of the battery shown in FIG. 2 according to some embodiments;
FIG. 4 is a partial structural schematic diagram of a thermal management component of the battery shown in FIG. 2 according to some embodiments;
FIG. 5 is a partial enlargement view of a part C of the battery shown in FIG. 2;
FIG. 6 is a structural schematic diagram of the thermal management component of the battery shown in FIG. 4;
FIG. 7 is a partial enlargement view of a part F 1 of the thermal management component of the battery shown in FIG. 6;
FIG. 8 is a partial enlargement view of a part F2 of the thermal management component of the battery shown in FIG. 6;
FIG. 9 is a flow chart of a preparation method of a battery according to some embodiments of the present application;
FIG. 10 is a system connection diagram of a preparation device of a battery according to some embodiments of the present application.

### DETAILED DESCRIPTION OF EMBODIMENTS

In order to make objectives, technical solutions, and advantages of the embodiments of the present application clearer, the technical solutions in the embodiments of the present application are described clearly and completely in the following with reference to accompanying drawings in the embodiments of the present application. Apparently, the described embodiments are only portion rather than all of the embodiments of the present application. Based on the embodiments of the present application, all other embodiments obtained by those ordinarily skilled in the art without exerting creative effort fall within the scope of protection of the present application.

Unless otherwise defined, all technical and scientific terms used herein have the same meanings as are commonly understood by those skilled in the art of the present application. Terms used herein in the description of the present application are for the purpose of describing specific embodiments only and are not intended to limit the present application. The terms "including" and "having" and any variations thereof in the description and claims of the present application and the above description of the drawings are intended to cover non-exclusive inclusion. It needs to be noted that the terms "first", "second" and the like in the description and claims as well or the above drawings of the present application are used to distinguish similar objects rather than describe a specific order or sequence.

"Embodiments" referred to in the present application means that a particular feature, structure, or characteristic described in connection with embodiments may be included in at least one embodiment of the present application. The presence of the phrase in various places in the description does not necessarily mean the same embodiment, nor is it a separate or alternative embodiment that is mutually exclusive with other embodiments. It is explicitly and implicitly understood by those skilled in the art that the embodiments described herein may be combined with other embodiments.

The term "and/or" herein is simply a description of the association relationship of the associated objects, indicating that three relationships may exist, for example, A and/or B may indicate that A exists alone, A and B exist at the same time, and B exists alone. In addition, the character "/" herein generally means that the associated objects are in an "or" relationship.

As used in the present application, "multiple" refers to more than two (including two). Likewise, "multiple groups" refers to more than two (including two) groups, and "multiple pieces" refers to more than two (including two) pieces.

In the development of battery technology, besides improving the performance of batteries, the service life and safety are also problems that cannot be ignored. If the service life of the batteries does not reach the expected time, the maintenance and use cost of the batteries will be very high. If the safety of the batteries cannot be guaranteed, the batteries cannot be used. One of the disadvantages of the batteries is that its performance is greatly affected by temperature, and the batteries need to work in a certain temperature range. If the temperature is too low or too high, it will cause irreversible damage to the batteries and weaken its performance. In severe cases, it will cause internal short circuit or even thermal runaway of the batteries, resulting in serious accidents. Therefore, ensuring the batteries in a suitable temperature range is a necessary condition to ensure the service life of the batteries.

Compared with air cooling, a structure of a battery thermal management component cooled by liquid is more compact and a cooling effect is better. In the case of a battery composed of cylindrical battery cells, the cooling of the battery is usually done by adopting a cooling plate with a serpentine flat tube. Upper and lower plates of the cooling plate of the serpentine flat tube are completely separated to form a relatively large fluid passage capable of effectively cooling the battery. However, since the upper and lower plates of the cooling plate are completely separated from each other, it cannot be used for many types of battery cell placement. For example, when it is used for a battery that include multiple layers of "lying flat" docked battery cells, the large fluid passages formed in the cooling plate cannot support upper-layer battery cells well, which results in poor support strength of the cooling plate and thus makes the overall structure of the battery less stable.

In order to solve or at least partially solve the above problems and other potential problems existing in batteries in the prior art, the inventors of the present application propose a battery that can improve the support strength, heat exchange efficiency and energy density of the battery.

The technical solution described in the embodiment of the present application is applicable to various devices using batteries, such as mobile phones, portable equipment, notebook computers, battery cars, electric toys, electric tools, electric vehicles, ships and spacecraft, etc. For example, the spacecraft includes airplanes, rockets, space shuttles and spaceships, etc.

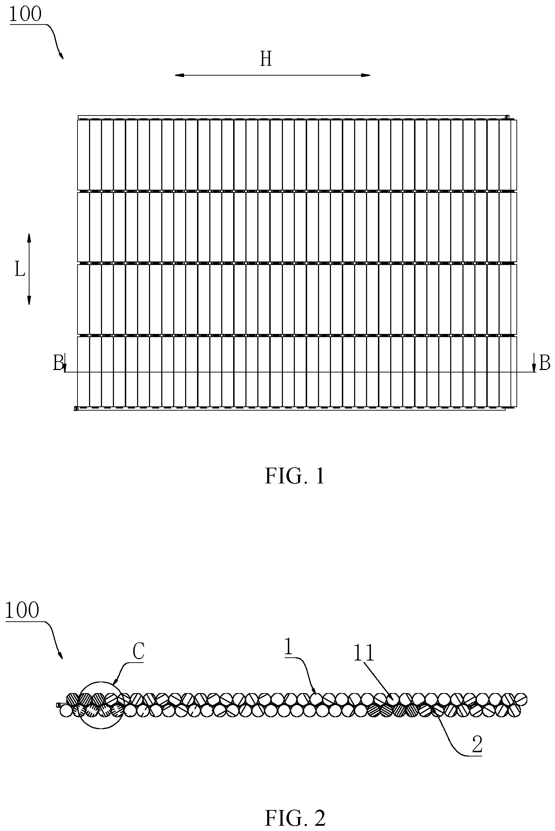

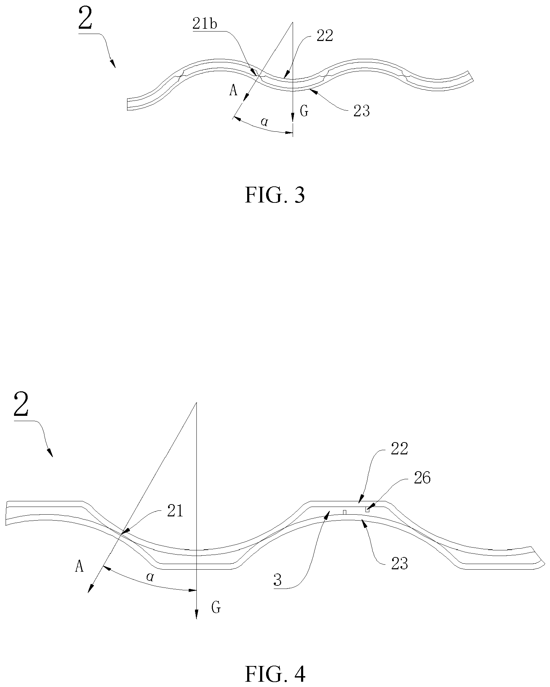

FIG. 1 and FIG. 2 show a structure of a battery 100 according to an embodiments of the present invention. As shown in FIGS. 1 and 2, the battery 100 includes at least two layers of battery units 1 and a thermal management component 2. Each layer of battery units 1 includes a plurality of battery cells 11 arranged in an array, wherein the battery cells 11 have an arc-shaped outer wall and the each layer of battery units 1 has a wavy shape; the thermal management component 2 is located between the at least two layers of battery units 1, the thermal management component 2 having a wavy shape corresponding to the wavy shape of the each layer of battery units 1, and as shown in conjunction with FIG. 3 or FIG. 4, the thermal management component 2 is used to provide support to the at least one layer of battery units 1 in a gravitational direction G and a first direction A, the gravitational direction G intersecting with the first direction A. The thermal management component 2 is provided with reinforcing structures (21 or 21b) for providing further support to the at least one layer of battery units 1 in the first direction A, as shown in conjunction with FIG. 3 or FIG. 4.

The battery 100 in the embodiment of the present application refers to a single physical module including a plurality of battery cells 11 to provide higher voltage and capacity. Placement forms of the battery cells 11 in the battery 100 may include a "standing" placement form and a "lying flat" placement form, and the battery cells 11 in the battery 100 of the embodiment of the present application are formed in the "lying flat" placement form. The battery 100 generally includes a box for encapsulating the battery cells 11. The box can avoid liquid or other foreign matter affecting the charging or discharging of the battery cells.

The battery cells 11 mentioned in the embodiment of the present application may include a lithium-ion secondary battery, a lithium-ion primary battery, a lithium-sulfur battery, a sodium-lithium-ion battery, a sodium-ion battery, a magnesium-ion battery, and the like, and which are not limited in the embodiments of the present application. The battery cells 11 may be cylindrical, flat, cuboid or other shapes, which are not limited in the embodiments of the present application either. The battery cells 11 are generally divided into three types according to the packaging mode: cylindrical battery cells, rectangular battery cells and pouch battery cells, which are not limited in the embodiments of the present application either. The battery cells 11 include an electrode assembly and an electrolyte, the electrode assembly is composed of a positive plate, a negative plate and a separator. The battery cells 11 work mainly depending on movement of metal ions between the positive and negative plates. The positive plate includes a positive current collector and a positive active material layer, the positive active material layer is coated on a surface of the positive current collector, the current collector not coated with the positive active material layer protrudes from the current collector coated with the positive active material layer, and the current collector not coated with the positive active material layer serves as a positive tab. In case of lithium-ion batteries, a material of the positive current collector may be aluminum, and the positive active material may be lithium cobaltate, ferrous lithium phosphate, ternary lithium or lithium manganate, etc. The negative plate includes a negative current collector and a negative active material layer. The negative active material layer is coated on a surface of the negative current collector, the current collector not coated with the negative active material layer protrudes from the current collector coated with the negative active material layer, and the current collector not coated with the negative active material layer serves as a negative tab. A material of the negative current collector may be copper, and the negative active material may be carbon or silicon. In order to ensure that a large current is passed without fusing, a plurality of positive tabs are provided and stacked together, and a plurality of negative tabs are provided and stacked together. The separator may be made of PP or PE. Further, the electrode assembly may be a winding structure or a laminated structure, and the embodiment of the present application is not limited thereto.

The battery unit 1 mentioned in the embodiment of the present application refers to a plurality of battery cells 11 arranged in an array on the same layer in the vertical direction when the battery is normally used. The array arrangement mentioned in the embodiment of the present application means that the battery cells 11 are arranged in M rows and N columns, where M and N are integers, and M ≥ 1 and N ≥ 2. Specifically, a plurality of battery cells 11 of the same layer may be arranged in parallel and side-by-side in a row direction H, and only one or a plurality of battery cells 11 may be arranged in a column direction L. When the plurality of battery cells 11 are arranged, two adjacent battery cells 11 in the column direction L are connected in such a manner that electrode terminals are opposed to each other. The battery cells 11 of adjacent rows of each layer of battery units 1 may be connected in series or in parallel by a bus component. The at least two layers of battery cells 1 mean that the battery 100 of the embodiment of the present application includes at least two layers of battery units 1 stacked in a vertical direction as described above, that is, it may also include more than two layers of battery units 1. Certainly, the battery units 1 may also be the case where the battery cells 11 are arranged at an angle with respect to the row direction H or the column direction L etc., and the present application is not limited thereto.

The arc-shaped outer wall of the battery cell 11 mentioned in the embodiment of the present application is convenient for those skilled in the art to better understand the solution of the present application, and the arc shape may be a continuous or discontinuous combination of any curve or straight line, such as ellipse, polyprism, etc. The technical solution of the present application is described in detail only by taking the cylindrical battery cell 11 as an example, and the arc-shaped outer wall is the shape of the outer surface of the battery cell 11. In the embodiment of the present application, the wavy shape of each layer of the battery units 1 refers to the wavy shape of each layer of the battery units 1 formed splicing the arc-shaped outer walls of the battery cells 11 of adjacent rows along the row direction H, and the size of the wavy concave-convex surface is limited by the distance between the adjacent rows of battery cells 11, and a shape of the wavy shape is determined according to a shape of the outer surfaces of the battery cells 11.

The thermal management component 2 mentioned in the embodiment of the present application is provided for accommodating a fluid to regulate a temperature of a plurality of battery cells 11. Here, the fluid may be a liquid or a gas, and regulating the temperature means heating or cooling the plurality of battery cells 11. In the case of cooling the battery cells 11, the thermal management component 2 is used for accommodating a cooling fluid to lower the temperature of the plurality of battery cells 11. In this case, the thermal management component 2 may also be referred to as a cooling member, a cooling system, or a cooling plate, etc. The fluid contained therein may also be referred to as a cooling medium or a cooling fluid, and more specifically, may be referred to as a cooling liquid or a cooling gas. In addition, the thermal management component 2 may also be used for heating to heat up the plurality of battery cells which is not limited in the present application embodiment. Optionally, the fluid may be circulating to achieve better temperature regulation effects. Optionally, the fluid may be water, a mixture of water and ethylene glycol, or air. The wavy shape of the thermal management component 2 mentioned in the embodiment of the present application is a surface shape for accommodating the battery cells 11, which is formed by connecting concave and convex surfaces and fits with the surface of the battery cell 11. It needs to be explained here that since the battery cell 11 may be cylindrical, flat, cuboid or other shapes, when the battery cell 11 of other shapes is concerned, the wavy shape of the thermal management component 2 may be adaptively changed to fit the surface of the battery cell 11. The cross-sectional shape of the fluid passage in the thermal management component 2 may also be adaptively changed.

Being located between at least two layers of battery units 1 mentioned in the embodiment of the present application indicates that at least one of the two sides of the thermal management component 2 may include only one layer of battery units 1, or may include multiple layers of battery units 1. When at least one of the two sides of the thermal management component 2 includes multiple layers of battery units 1, the thermal management component 2 can only perform thermal management to the layer of battery units 1 to which it is attached, and can also support the multiple layers of battery units 1 above it. When the battery cells 11 are placed in the "lying flat" form, orientations of the two sides of the thermal management component 2 are orientations above and below the thermal management component 2, respectively. When the battery cell 11 is placed in a "standing" mode, the orientations of the two sides of the thermal management component 2 are left and right sides of the thermal management component 2, respectively.

The gravitational direction G mentioned in the embodiment of the present application is an example of the gravitational direction after the battery cells are arranged in the "lying flat" form. Certainly, the present application also includes some other arrangements such as a "standing" arrangement of the battery. For example, when the battery shown in FIG. 1 is placed vertically in the device, that is, when the battery of FIG. 2 is rotated 90 degrees perpendicular to the paper surface, or when it is placed obliquely, it is also within the scope of the present application. In the case of a single cylindrical battery cell, the gravitational direction G where the thermal management component 2 serves to support is the direction of the shortest distance of the cylindrical battery cell from a center of its cross section along the plane on which the thermal management component 2 is located. The first direction A is the other direction different from the gravitational direction G.

The support mentioned in the embodiment of the present application means that the thermal management component 2 can provide an upward force to the battery cells 11. Providing support to at least one layer of the battery units 1 in the gravitational direction G and the first direction A in the embodiment of the present application means that the thermal management component 2 can provide support force to the battery cells 11 in both directions. The reinforcing structures (21 or 21b) mentioned in the embodiment of the present application mean that it can improve deformation resistance of the thermal management component 2, such as a reinforcing rib. Further support mentioned in embodiment of the present application means that further support can be provided in a non-gravitational direction.

Specifically, in the case of the cylindrical battery cell, according to the present application, the battery cells 11 are placed on the thermal management component 2, so that the wavy shape of the thermal management component 2 corresponds to and fits with the wavy shape of each layer of the battery units 1. Concave surfaces of the concave-convex surface of the wavy shape are used for accommodating the battery cells 11 to support the upper-layer battery cells 11, and the support to the battery cells 11 by the concave surfaces is the support in the gravitational direction G. In the present application, the thermal management component 2 is provided with a reinforcing structure 21 which provides further support to at least one layer of battery units 1 in the first direction A. The first direction A intersects with the gravitational direction G. That is to say, the thermal management component 2 supports the at least one layer of the battery units 1 along the gravitational direction G by wavy concave surfaces, it can also provide support for the at least one layer of battery units 1 in a non-gravitational direction, so that the thermal management component 2 of the present application can support the battery units 1 in the two directions, thereby enabling the thermal management component 2 of the present application to have better support strength. By improving the support strength of the thermal management component 2, the stability of the overall structure of the battery 100 according to embodiments of the present invention will be better.

In some embodiments, as shown in conjunction with FIG. 3 or FIG. 4, the angle α at which the gravitational direction G intersects with the first direction A is set to 0°< α ≤ 90°. It can be understood that the battery cells 11 in the battery unit 1 may be arranged in two forms:

One is with the column direction L as a lateral direction, as shown in FIG. 2, that is, adjacent battery cells 11 in the same column are connected oppositely in a "lying-flat" form. For cylindrical battery cells with electrode terminals located at one end or both ends, "lying-flat" means that the electrode terminals of cylindrical battery cells are located in a horizontal plane, not in a vertical plane. The electrode terminals of adjacent battery cells 11 in the same column are fixedly connected (for example, welded) to form a battery cell column including at least two battery cells, and then at least two battery cell columns are arranged in the lateral direction, thereby configuring the battery unit 1 in which the battery cells 11 are all in the laying-flat form.

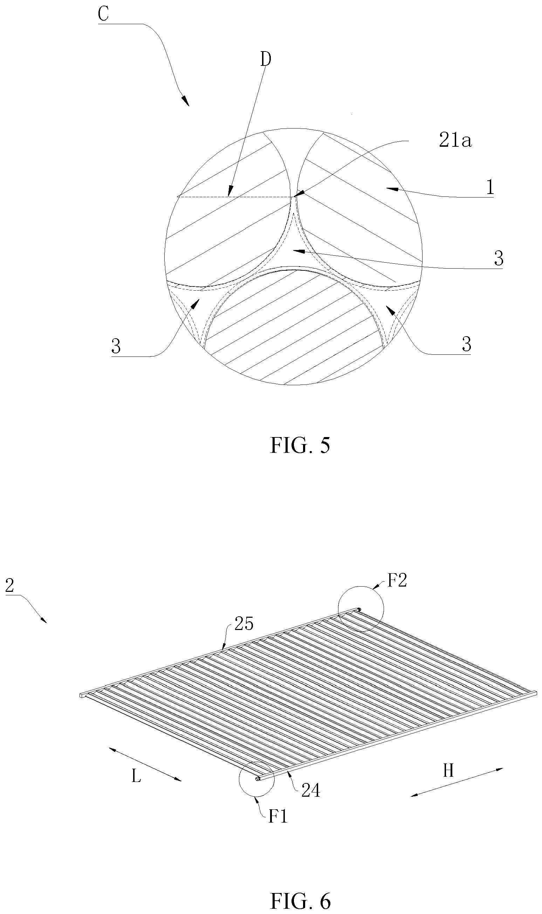

In this embodiment, a definition of two support positions is proposed, i.e., the specific position of the reinforcing structure 21 that provides support to the battery unit 1. Specifically, as shown in FIG. 5, an outer peripheral wall of the battery cell 11 having an arcuate surface is divided into a first arcuate surface located above and a second arcuate surface fitted with the thermal management component 2 by a diameter D perpendicular to the gravitational direction G. The angle α may have two angle ranges: 0°< α <90° and α = 90°. In the two angle ranges, it can be understood that when 0°<a <90°, the angle α that the gravitational direction G intersects with the first direction A is an acute angle, and the position of the reinforcing structure 21 for providing support to the battery unit 1 in the first direction A needs to be located in a region of the second arcuate surface as shown in conjunction with FIG. 3 or FIG. 4. When α = 90°, the support position of the reinforcing structure 21 needs to be at the position of the diameter D in conjunction with a dotted line 21a in FIG. 5, to form a maximum contact area with the surface of the battery cells 11. With this arrangement, the thermal management component 2 may provide support in a direction intersecting with the gravitational direction G, or even in a direction perpendicular to the gravitational direction G, and can surround the battery cells 11 in a wider range to provide stable support for each battery cell 11.

The other is with the column direction L as a vertical direction, that is, the adjacent battery cells 11 in the same column are oppositely connected in the form of "standing", and joints of the adjacent battery cells 11 are fixedly connected (for example, welded) to form a battery cell column, and then arranged in the lateral direction, thereby configuring the battery unit 1 in which the battery cells 11 are all in the standing form. In this embodiment, the definition of two support positions is also proposed, i.e., the specific position of the reinforcing structure 21 that provides support to the battery unit 1. Specifically, an outer peripheral wall of the battery cell 11 having an arcuate surface is divided into a first arcuate surface at one side and a second arcuate surface fitted with the thermal management component 2 by the gravitational direction G. The angle α may have two angle ranges: 0°< α <90° and α = 90°. In the two angle ranges, it can be understood that when 0°<a <90°, the angle α that the gravitational direction G intersects with the first direction A is an acute angle, and the position of the reinforcing structure 21 for providing support to the battery unit 1 in the first direction A needs to be located in a region forming by the diameter perpendicular to the gravitational direction G and the gravitational direction G. When α = 90°, the support position of the reinforcing structure 21 needs to be at the position of the diameter D.

In some embodiments, the thermal management component 2 may include a first plate portion 22 and a second plate portion 23, as shown in conjunction with FIG. 3. The first plate portion 22 has a wavy shape and is used for supporting at least one layer of battery units 1. The second plate portion 23 has a wavy shape and is disposed opposite to the first plate portion 22. The first plate portion 22 and/or the second plate portion 23 are formed with thickened portions 21b toward an interior of the thermal management component 2, and the thickened portions 21b constitute the reinforcing structure 21.

The first plate portion 22 and the second plate portion 23 mentioned in the embodiment of the present application refer to a plate-like structure that may have a uniform thickness. Optionally, the first plate portion 22 and the second plate portion 23 may be made of a thermally conductive material, for example, a high strength and high thermal conductivity composite material or a metallic material. With this arrangement, on the one hand, the support strength of the first plate portion 22 and the second plate portion 23 can be ensured. On the other hand, the heat conduction efficiency can be further effectively improved, and the heat exchange efficiency of the thermal management component 2 can be improved.

Optionally, the first plate portion 22 and the second plate portion 23 may be metal plates, preferably aluminum plates. Since a weight of the aluminum plate is lighter than that of other metal materials, weights of the first plate portion 22 and the second plate portion 23 can be effectively reduced. The wavy shape mentioned in the embodiment of the present application is a surface shape for accommodating the battery cells 11, which is formed by connecting concave and convex surfaces and fits with the surface of the battery cell 11. It needs to be explained here that since the battery cell 11 may be cylindrical, flat, cuboid or other shapes, when the battery cell 11 of other shapes is concerned, the wavy shape of the thermal management component 2 may be adaptively changed to fit the surface of the battery cell 11. The cross-sectional shape of the fluid passage in the thermal management component 2 may also be adaptively changed.

The thickened portion 21b formed inside mentioned in the embodiment of the present application refers to a convex structure formed on the first plate portion 22 and/or the second plate portion 23. The convex structure has a thickness greater than thickness of plates of the first plate portion 22 and/or the second plate portion 23. The first plate portion 22 and/or the second plate portion 23 can be connected by this convex structure, whereby the second plate portion 23 located below can support the first plate portion 22 by the thickened portion 21b, thereby dispersing the effect of gravity of a part of the battery cells 11 on the first plate portion 22 and supporting the battery cells 11 by the first plate portion 22. Therefore, the support of the thermal management component 2 to the upper-layer battery cells 11 can be improved by the convex structure.

In some embodiments, the thermal management component 2 may include a first plate portion 22 and a second plate portion 23, as shown in conjunction with FIG. 4. The first plate portion 22 has a wavy shape and is used for supporting at least one layer of battery units 1. The second plate portion 23 has a wavy shape and is arranged opposite to the first plate portion 22. The first plate portion 22 and/or the second plate portion 23 are formed with abutting portions the first plate portion 22 and the second plate portion 23 are abutted by the abutting portions, and the abutting portions constitute the reinforcing structure 21.

The abutting portion 21 mentioned in the embodiment of the present application may be formed by deformation of the first plate portion 22 and/or the second plate portion 23, or may be formed by abutment between the concave-convex surface of the first plate portion 22 and the second plate portion 23 after the concave and convex surfaces of the wavy first plate portion 22 and the second plate portion 23 are dislocated. The first plate portion 22 and the second plate portion 23 are abutted through the abutting portions. The support strength of the thermal management component 2 to the upper-layer battery cells 11 can be improved by the abutting portions, at which time the abutting portions can also support the upper-layer battery cells 11 by means of the lower-layer battery cells 11 or even the battery frame, thereby further improving the stability of the overall structure of the battery 100. Specifically, the abutting portions can support the upper-layer battery cells 11 in combination with the combined action of the support strength of the overall structure of the lower-layer battery cells 11 with the abutting portion 21. The abutting portion 21 can support the upper-layer battery cells 11 in combination with the combined action of the support strength of the overall structure of the battery frame with the abutting portion 21 after two ends are fixedly connected with the battery frame.

In some embodiments, as shown in conjunction with FIGS. 2-4, the thermal management component 2 includes a plurality of reinforcing structures 21 that extend in a column direction L and are spaced in a row direction H.

The plurality of reinforcing structures 21 mentioned in the embodiment of the present application refers to two or more reinforcing structures 21. The column direction L and the row direction H mentioned in the embodiment of the present application mean that, in the case of the cylindrical battery cells, in combination with the description above, it can be seen that the battery cells 11 are arranged in M rows and N columns in each layer of battery units 1, the column direction L is an axis direction of the battery cells 11, and the row direction H is a direction perpendicular to an axis. The spacing arrangement mentioned in the embodiment of the present application refers to a space having a certain distance between adjacent reinforcing structures 21. As shown in FIG. 4, a certain battery cell has the reinforcing structures 21 at both sides respectively, which can provide further symmetrical support for the battery cells 11, and can provide further position definition for, for example, a cylindrical battery cell in a recess of the thermal management component 2. In this embodiment, it is applicable that each layer of battery units 1 includes a plurality of battery cells 11 arranged in an array, and the plurality of battery cells 11 are arranged in the column direction L and the row direction H, and a plurality of reinforcing structures 21 formed can further improve the support strength of the thermal management component 2 to the battery units 1 in the battery 100.

In some embodiments, as shown in conjunction with FIGS. 3-5, fluid passages 3 extending in the column direction L are formed between adjacent reinforcing structures 21, and the fluid passages 3 are isolated from each other in the row direction H for thermal management of the battery 100.

The adjacent reinforcing structures 21 mentioned in the embodiment of the present application refer to the two closest reinforcing structures 21 among the reinforcing structures 21 arranged at intervals in the row direction H. The fluid passage 3 mentioned in the embodiment of the present application refers to a passage for accommodating a fluid to regulate a temperature of the battery cells 11. The fluid passages 3 extending in the column direction L indicates that the fluid passages extend in a direction the same as an alignment direction of the battery cells 11 arranged in the column direction L. Isolating from each other in the row direction H means that the fluid passages 3 are constructed as independent passages, and the adjacent passages are not connected. The thermal management mentioned in the embodiment of the present application refers to temperature regulating, i.e., heating or cooling the battery cells 11. As can be seen from the above description, the thermal management component 2 has a wavy shape corresponding to the wavy shape of each layer of battery units 1. In this way, a shape of the fluid passage 3 can be configured to match an outer wall of the battery cells 11, so that a contact area between the fluid passages 3 and the battery cells 11 can be increased. The larger the contact area between the fluid passages 3 and the battery cells 11, the better the effect of cooling or heating the battery cells 11 by the fluid passing through the fluid passages 3. Furthermore, although the whole thermal management component 2 is in a wavy shape and a cross-sectional shape of the fluid passage 3 is also irregular, the fluid passages 3 are direct fluid passages along the column direction L, which can maintain the fastest flow speed under a complex shape to improve the heat transfer efficiency.

Preferably, it is also specifically mentioned above that the thermal management component 2 includes the first plate portion 22 and the second plate portion 23, both of which have wavy shapes, and the fluid passage 3 is constructed between the concave and convex surfaces of the first plate portion 22 and the second plate portion 23 by their dislocation. The fluid passages 3 are constructed as special-shaped direct flow passages having the same wall thicknesses by the first plate portion 22, the second plate portion 23 and their concave and convex surfaces. In this way, on the one hand, the same wall thickness makes heat transfer paths of the fluid passages 3 to all parts of the fitting surface of the battery cells 11 the same, so that the heat exchange effect is more uniform. On the other hand, the fluid in the fluid passages 3 of the direct passage can have a small resistance when flowing, so that the heat exchange effect of the fluid passages 3 can be further improved, and thus the thermal management effect of the thermal management component 2 can be improved.

In some embodiments, as shown in conjunction with FIG. 5, the column direction L is perpendicular to the gravitational direction G, the battery cells 11 of upper-layer battery units 1 are located directly above lower-layer fluid passages 3, the battery cells 11 of lower-layer battery units 1 are located directly below upper-layer fluid passages 3, and adjacent reinforcing structures 21 are symmetrically disposed on two sides of the corresponding battery cells 11.

In the embodiment of the present application, since the adjacent reinforcing structures 21 are symmetrically arranged on both sides of the corresponding battery cells 11, so that the fluid passages 3 have its own axis of symmetry, and the directly above and directly below mentioned in the embodiment of the present application refer to the position where the gravitational direction of the battery cell 11 crosses exactly the axis of symmetry of the corresponding fluid passage 3. Combined with the above description, the fluid passage 3 is formed by connecting the dislocated concave and convex surfaces of the first plate portion 22 and the second plate portion 23 and then abutting. The wall surface of the fluid passage 3 needs to include: a concave surface of the first plate portion 22 and a convex surface of the second plate portion 23; or a concave surface of the second plate portion 23 and a convex surface of the first plate portion 22. As shown in conjunction with FIG. 5, the angle α at which the gravitational direction G intersects with the first direction A is set to 0°< α ≤ 90°. In this way, the structure of the fluid passage 3 in this embodiment needs to include two forms: one is that when 0° < α < 90° (i.e., the fluid passage 3 shown in FIG. 4), the convex surface can be constructed as a connecting surface that connects two adjacent concave surfaces, in which case the fluid passage 3 includes four wall surfaces. The another is that when α = 90° (i.e., the fluid passage 3 shown by a dotted line in FIG. 5), the convex surface may be configured as a connecting end portion that connects two adjacent concave surfaces, i.e., two adjacent concave surfaces are directly connected, in which case the fluid passage 3 may include only three wall surfaces.

With the above arrangement, when the fluid passage 3 has only three wall surfaces, the fluid passage 3 can fill a gap between the upper-layer and lower-layer battery cells 11 after being dislocated, so that a cross-sectional area of the fluid passage 3 is maximized and a fitting area with the surface of the battery cells 11 is maximized. Thus, it is possible to minimize a distance between adjacent battery cells 11 in the row direction H, and they can even contact each other, making two layers of battery cells 11 in a vertical direction interlaced with each other. A layout distance of a plurality of battery cells 11 in the row direction H and a layout distance of the two-layer battery cells 11 in the vertical direction are reduced, thereby greatly improving an energy density of the battery 100. Moreover, such an arrangement not only increases the amount of a fluid in the fluid passages 3, but also increases fitting surfaces between the fluid passages and the surfaces of the battery cells 11, thereby maximizing the heat exchange efficiency of the thermal management component 2.

In some embodiments, as shown in conjunction with FIG. 4, heat dissipation fins 26 may be formed on inner walls of the fluid passage 3, and the heat dissipation fins 26 extend in the column direction L.

The inner wall of the fluid passage 3 mentioned in the embodiment of the present application refers to the inner wall surfaces facing each other of the first plate portion 22 and the second plate portion 23 configuring the fluid passage 3. The heat dissipation fins 26 mentioned in the embodiment of the present application refer to heat dissipation plates formed on the inner walls. In the embodiment of the present application, the extension in the column direction L refers to an extension in a length direction of the fluid passage 3, which is the same as a flow direction of the fluid. Preferably, the heat dissipation fins 26 are formed on each inner wall surface of the fluid passage 3. With the above arrangement, the heat dissipation fins 26 can increase the contact area between the fluid and the inner walls of the fluid passage 3 thereby further improving the efficiency of heat exchange. It needs to be noted that the heat dissipation fins 26 may be connected perpendicularly to a tangent plane at connection points on each wall surface.

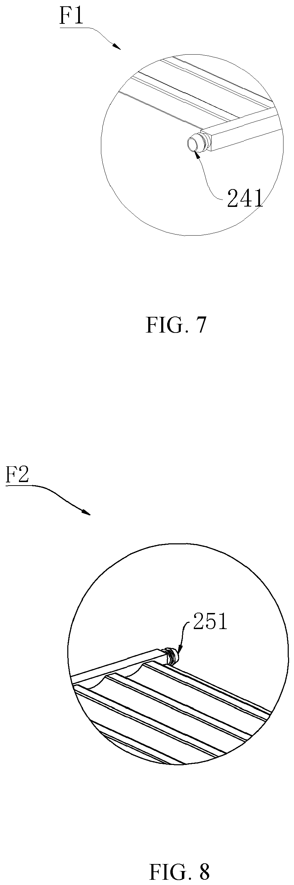

In some embodiments, as shown in conjunction with FIGS. 6-8, the thermal management component 2 may also include a first flow collection member 24 and a second flow collection member 25. The first flow collection member 24 is provided on one side in the column direction L and is fixedly connected with the first plate portion 22 and the second plate portion 23, wherein an inlet end of each fluid passage 3 is communicated with the first flow collection member 24. The second flow collection member 25 is arranged on the other side in the column direction L and is fixedly connected with the first plate portion 22 and the second plate portion 23, wherein an outlet end of each fluid passage 3 is communicated with the second flow collection member 25. A first water inlet 241 is formed on the first flow collection member 24, and a first water outlet 251 is formed on the second flow collection member 25, and the first water inlet 241 and the first water outlet 251 are located at two ends in the row direction H.

The first flow collection member 24 mentioned in the embodiment of the present application refers to a member for communicating with an external water source so as to enable the external water source to be collected, and the location where the member connects to the external water source is where the first water inlet 241 is formed on the first flow collection member 24 referred to in the embodiment of the present application. The external water source is collected through the first flow collection member 24, and then flows into each fluid passage 3 in turn, so that the position where the fluid passages communicate with the first flow collection member 24 is an inlet end mentioned in the embodiment of the present application. The second flow collection member 25 mentioned in the embodiment of the present application refers to a member for communicating with the fluid passages 3 so as to enable the water source flowing through the fluid passages 3 to be collected, and the position where the fluid passages 3 communicate with the second flow collection member 25 is an outlet end mentioned in the embodiment of the present application. The water source in each fluid passage 3 is collected by the second flow collection member 25 and then discharged to the external environment. The first water outlet 251 is formed on the second flow collection member 25 mentioned in the embodiment of the present application at the position where the second flow collection member communicates with the outside. Further, the "side" mentioned in the embodiment of the present application needs to be understood as two side edges of the thermal management component 2 in the column direction L; and "end" needs to be understood as two end portions of the first and second flow collection members 24 and 25 in the row direction H.

With the above settings, the first water inlet 241 and the first water outlet 251 can be formed at diagonal positions, so that a flow path of the fluid passing through the first water inlet 241 and the first water outlet 251 is the longest flow path, and the longest flow path can improve a contact range and time of the fluid and the battery cells 11, thereby improving the effective heat exchange between the thermal management component 2 and the battery cells 11.

In some embodiments, a plurality of water inlets are formed at intervals along the row direction H on the first flow collection member 24, and a plurality of water outlets corresponding to the respective water inlets are formed at intervals along the row direction H on the second flow collection member 25. In the embodiment of the present application, a plurality of water inlets are formed at intervals on the first flow collection member 24, and a plurality of water outlets are correspondingly formed on the second flow collection member 25, which can be understood as each fluid passage 3 having independent water inlet and water outlet. In this way, the flow path of the fluid in the fluid passage 3 can be shortened, so that the fluid in the fluid passage 3 can be quickly discharged after heat exchange, so as to ensure the stability of the heat exchange efficiency and further improve the heat exchange efficiency between the thermal management component 2 and the battery cells 11.

In some embodiments, the first plate portion 22 and the second plate portion 23 may be configured to be in contact abutment or fixedly connected by an abutting portion. The contact abutment means that the first plate portion 22 and the second plate portion 23 are only contacted and connected by the abutting portion and are not fixed. Fixed connection means that the first plate portion 22 and the second plate portion 23 can be connected by bonding or welding.

The embodiment of the invention also provides an electrical device, which includes a battery 100 described in the above embodiments, and the battery 100 is used for providing electric energy. The battery 100 described in the embodiment of the present application is applicable to various electrical devices using the battery 100. For example, mobile phones, portable devices, notebook computers, battery cars, electric cars, ships, spacecraft, electric toys and electric tools, etc. For example, the spacecraft include airplanes, rockets, space shuttles, spaceships and so on. The electric toys include fixed or mobile electric toys, for example, game machines, electric car toys, electric ship toys and electric plane toys, etc. The electric tools include metal cutting electric tools, grinding electric tools, assembly electric tools and railway electric tools, such as electric drills, electric grinders, electric wrenches, electric screwdrivers, electric hammers, impact electric drills, concrete vibrators and electric planers.

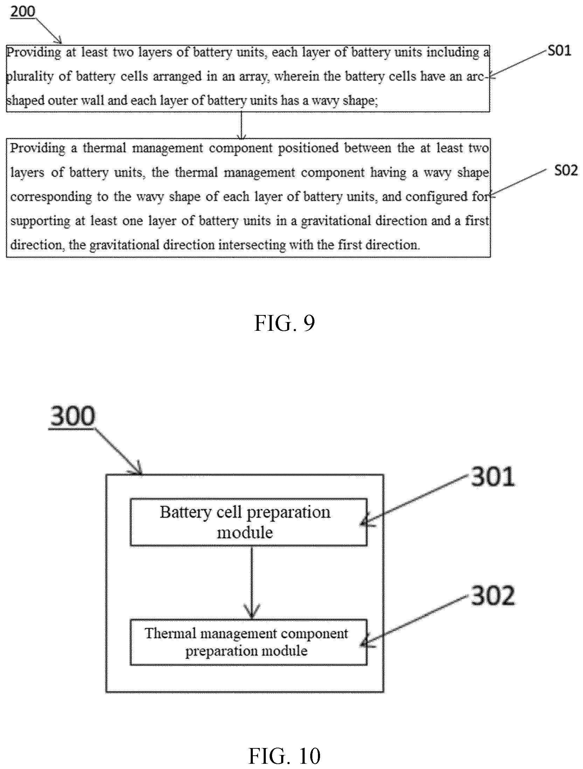

FIG. 9 shows a flow chart of a preparation method 200 of the battery 100 according to an embodiment of the present invention. The preparation method 200 includes:
S01: providing at least two layers of battery units 1, each layer of battery units 1 including a plurality of battery cells 11 arranged in an array, wherein the battery cells 11 have an arc-shaped outer wall and the each layer of battery units 1 has a wavy shape; and
S02: providing a thermal management component 2 positioned between the at least two layers of battery units 1, the thermal management component 2 having a wavy shape corresponding to the wavy shape of the each layer of battery units 1, and configured for providing support to the at least one layer of battery units 1 in a gravitational direction G and a first direction A, the gravitational direction G intersecting with the first direction A.

The thermal management component 2 is provided with a reinforcing structure 21 for providing further support to the at least one layer of battery units 1 in the first direction A.

Specifically, in the case of a cylindrical battery cell, according to the present application, the battery cells 11 are placed on the thermal management component 2, so that the wavy shape of the thermal management component 2 corresponds to and fits with the wavy shape of the each layer of the battery units 1. Concave surfaces of a concave-convex surface of the wavy shape are used for accommodating the battery cells11 to support the upper-layer battery cells 11, and the support to the battery cells 11 by concave surfaces is the support in the gravitational direction G. In the present application, the thermal management component 2 is provided with a reinforcing structure 21 which provides further support to the at least one layer of battery units 1 in the first direction A. The first direction A intersects with the gravitational direction G. That is to say, the thermal management component 2 supports the at least one layer of the battery units 1 along the gravitational direction G by wavy concave surfaces, it can also provide support for the at least one layer of battery units 1 in a non-gravitational direction, so that the thermal management component 2 of the present application can support the battery units 1 in the two directions, thereby enabling the thermal management component 2 of the present application to have a better support effect. By improving the support strength of the thermal management component 2, the stability of the overall structure of the battery 100 according to embodiments of the present invention will be better.

In some embodiments, the method also includes setting an angle α at which the gravitational direction G intersects with the first direction A to 0°< α ≤ 90°. It can be understood that the battery cells 11 in the battery units 1 may be arranged in two forms:
one is with the column direction L as a lateral direction, that is, the adjacent battery cells 11 in the same column are oppositely connected in a form of "lying-flat", and joints of the adjacent battery cells 11 are fixedly connected (for example, welded) to form a battery cell column, and then arranged in the lateral direction, thereby configuring the battery unit 1 in which the battery cells 11 are all in the lying-flat form. In this embodiment, a definition of two support positions is proposed, i.e., the specific position of the reinforcing structure 21 that provides support to the battery unit 1. Specifically, an outer peripheral wall of the battery cell 11 having an arcuate surface is divided into a first arcuate surface located above and a second arcuate surface fitted with the thermal management component 2 by a diameter D perpendicular to the gravitational direction G. The angle α may have two angle ranges: 0°< α <90° and α = 90°. In the two angle ranges, it can be understood that when 0°<α <90°, the angle α that the gravitational direction G intersects with the first direction A is an acute angle, and the position of the reinforcing structure 21 for providing support to the battery unit 1 in the first direction A needs to be located in a region of the second arcuate surface as shown in conjunction with FIG. 6. When α = 90°, the support position of the reinforcing structure 21 needs to be at the position of the diameter D in conjunction with the dotted line 21a in FIG. 6, to form a maximum contact area with the surface of the battery cells 11. With this arrangement, the thermal management component 2 can provide support in a direction intersecting with the gravitational direction G, or even in a direction perpendicular to the gravitational direction G, and can surround the battery cells 11 in a wider range to provide stable support for each battery cell 11.

The other is with the column direction L as a vertical direction, that is, the adjacent battery cells 11 in the same column are oppositely connected in a form of "standing", and joints of the adjacent battery cells 11 are fixedly connected (for example, welded) to form a battery cell column, and then arranged in the lateral direction, thereby configuring the battery unit 1 in which the battery cells 11 are all in the standing form. In this embodiment, the definition of two support positions is also proposed, i.e., the specific position of the reinforcing structure 21 that provides support to the battery unit 1. Specifically, an outer peripheral wall of the battery cell 11 having an arcuate surface is divided into a first arcuate surface at one side and a second arcuate surface fitted with the thermal management component 2 by the gravitational direction G. The angle α may have two angle ranges: 0°< α <90° and α = 90°. Among the two angle ranges, it can be understood that when 0°α <90°, the angle α that the gravitational direction G intersects with the first direction A is an acute angle, and the position of the reinforcing structure 21 for providing support to the battery unit 1 in the first direction A needs to be located in a region forming by the diameter perpendicular to the gravitational direction G and the gravitational direction G. When α = 90°, the support position of the reinforcing structure 21 needs to be at the position of the diameter D.

In some embodiments, the thermal management component 2 may include a first plate portion 22 and a second plate portion 23. The first plate portion 22 has a wavy shape and is used for supporting at least one layer of battery units 1. The second plate portion 23 has a wavy shape and is disposed opposite to the first plate portion 22. The first plate portion 22 and/or the second plate portion 23 are formed with thickened portions 21b inside toward the thermal management component 2, and the thickened portions 21b constitute the reinforcing structure 21. Specifically, the thickened portion 21b may be constructed as a convex structure formed on the first plate portion 22 and/or the second plate portion 23. The convex structure has a thickness greater than thickness of plates of the first plate portion 22 and/or the second plate portion 23. The first plate portion 22 and/or the second plate portion 23 can be connected by this convex structure, whereby the second plate portion 23 located below can support the first plate portion 22 by the thickened portion 21b, thereby dispersing the effect of gravity of a part of the battery cells 11 on the first plate portion 22 and supporting the battery cells 11 by the first plate portion 22. Therefore, the support of the thermal management component 2 to the upper-layer battery cells 11 is improved by the convex structure.

In some embodiments, the thermal management component 2 may include a first plate portion 22 and a second plate portion 23. The first plate portion 22 has a wavy shape and is used for supporting at least one layer of battery units 1. The second plate portion 23 has a wavy shape and is disposed opposite to the first plate portion 22. The first plate portion 22 and/or the second plate portion 23 are formed with abutting portions (the part 21 or 21a shown in FIG. 3), the first plate portion 22 and the second plate portion 23 are abutted by the abutting portions, and the abutting portions constitute the reinforcing structure 21. Specifically, the abutting portion 21 may be formed by deformation of the first plate portion 22 and/or the second plate portion 23, or may be formed by abutment between the concave-convex surface of the first plate portion 22 and the second plate portion 23 after the concave and convex surfaces of the wavy first plate portion 22 and the second plate portion 23 are dislocated. The first plate portion 22 and the second plate portion 23 are abutted through the abutting portions. The support strength of the thermal management component 2 to the upper-layer battery cells 11 can be improved by the abutting portions, thereby ensuring the stability of the overall structure of the battery 100.

FIG. 10 shows a system connection diagram of a preparation device 300 of a battery 100 according to embodiments of the present invention. The preparation device 300 includes: a battery cell preparation module 301 for preparing a plurality of battery cells 11 arranged in an array into at least two layers of battery units 1, wherein the battery cells 11 have an arc-shaped outer wall and each layer of battery units 1 has a wavy shape; and a thermal management component preparation module 302 for preparing a thermal management component 2 located between the at least two layers of battery units 1, the thermal management component 2 having a wavy shape corresponding to the wavy shape of the each layer of battery units 1, the thermal management component 2 being configured for providing support to the at least one layer of battery units 1 in a gravitational direction G and a first direction A, the gravitational direction G intersecting with the first direction A, wherein the thermal management component 2 is provided with a reinforcing structure 21 for providing further support to the at least one layer of the battery units 1 in the first direction A.

Finally, it needs to be noted that, the above embodiments are only used to illustrate the technical solution of the present application and not to limit it. Although the present application has been described in detail with reference to the foregoing embodiments, it needs to be understood by those of ordinary skill in the art that the technical solution described in the foregoing embodiments can still be modified or some of the technical features thereof can be equivalently replaced. However, these modifications or substitutions do not depart the essence of the corresponding technical solution from the spirit and scope of the technical solution of each embodiment of the present application.

## Claims

1. A battery comprising:
at least two layers of battery units (1), each layer of battery units (1) comprising a plurality of battery cells (11) arranged in an array, wherein the battery cells (11) have an arc-shaped outer wall and the each layer of battery units (1) has a wavy shape; and
a thermal management component (2) positioned between the at least two layers of battery units (1), the thermal management component (2) having a wavy shape corresponding to the wavy shape of the each layer of battery units (1), and the thermal management component (2) being configured for providing support to at least one layer of battery units (1) in a gravitational direction and a first direction, the gravitational direction intersecting with the first direction,
wherein the thermal management component (2) is provided with a reinforcing structure (21) for providing further support to the at least one layer of battery units (1) in the first direction.

2. The battery according to claim 1, wherein an angle α at which the gravitational direction intersects with the first direction is set to 0°< α ≤ 90°.

3. The battery according to claim 1 or 2, wherein the thermal management component (2) comprises:
a first plate portion (22) having a wavy shape, for supporting the at least one layer of battery units (1); and
a second plate portion (23) having a wavy shape and being disposed opposite to the first plate portion (22),
wherein the first plate portion (22) and/or the second plate portion (23) are formed with thickened portions (21b) toward an interior of the thermal management component (2), and the thickened portions (21b) constitute the reinforcing structure (21).

4. The battery according to claim 1 or 2, wherein the thermal management component (2) comprises:
a first plate portion (22) having a wavy shape, for supporting the at least one layer of battery units (1); and
a second plate portion (23) having a wavy shape and being disposed opposite to the first plate portion (22),
wherein the first plate portion (22) and/or the second plate portion (23) are formed with abutting portions, the first plate portion (22) and the second plate portion (23) are abutted by the abutting portions, and the abutting portions constitute the reinforcing structure (21).

5. The battery according to claim 3 or 4, wherein the thermal management component (2) comprises a plurality of reinforcing structures (21) extending in a column direction and are spaced in a row direction.

6. The battery according to claim 5, wherein fluid passages (3) extending in the column direction are formed between adjacent reinforcing structures (21), and the fluid passages (3) are isolated from each other in the row direction for thermal management of the battery.

7. The battery according to claim 6, wherein the column direction is perpendicular to the gravitational direction, the battery cells (11) of upper-layer battery units (1) are located directly above lower-layer fluid passages (3), the battery cells (11) of lower-layer battery units (1) are located directly below upper-layer fluid passages (3), and the adjacent reinforcing structures (21) are symmetrically disposed on two sides of the corresponding battery cells (11).

8. The battery according to claim 6 or 7, wherein heat dissipation fins (26) are formed on inner walls of the fluid passages (3), and the heat dissipation fins (26) extend in the column direction.

9. The battery according to any one of claims 6 to 8, wherein the thermal management component (2) further comprises:
a first flow collection member (24) provided on one side in the column direction and fixedly connected with the first plate portion (22) and the second plate portion (23), wherein an inlet end of each of the fluid passages (3) is communicated with the first flow collection member (24);
a second flow collection member (25) arranged on the other side in the column direction and fixedly connected with the first plate portion (22) and the second plate portion (23), wherein an outlet end of each of the fluid passages (3) is communicated with the second flow collection member (25).
wherein a first water inlet (241) is formed on the first flow collection member (24), and a first water outlet (251) is formed on the second flow collection member (25), and the first water inlet (241) and the first water outlet (251) are located at two ends in the row direction.

10. The battery according to claim 9, wherein a plurality of water inlets are formed at intervals along the row direction on the first flow collection member (24), and a plurality of water outlets corresponding to the respective water inlets are formed at intervals along the row direction on the second flow collection member (25).

11. An electrical device comprising the battery of any one of claims 1 to 10 for supplying electrical energy.

12. A preparation method of a battery comprising:
providing at least two layers of battery units (1), each layer of battery units (1) comprising a plurality of battery cells (11) arranged in an array, wherein the battery cells (11) have an arc-shaped outer wall and the each layer of battery units (1) has a wavy shape; and
providing a thermal management component (2) positioned between the at least two layers of battery units (1), the thermal management component (2) having a wavy shape corresponding to the wavy shape of the each layer of battery units (1), and the thermal management component (2) being configured for providing support to at least one layer of battery units (1) in a gravitational direction and a first direction, the gravitational direction intersecting with the first direction,
wherein the thermal management component (2) is provided with a reinforcing structure (21) for providing further support to the at least one layer of battery units (1) in the first direction.

13. The preparation method according to claim 12, wherein an angle α at which the gravitational direction intersects with the first direction is set to 0°< α ≤ 90°.

14. The preparation method according to claim 12 or 13, wherein the thermal management component (2) comprises:
a first plate portion (22) having a wavy shape, for supporting the at least one layer of battery units (1); and
a second plate portion (23) having a wavy shape and being disposed opposite to the first plate portion (22),
wherein the first plate portion (22) and/or the second plate portion (23) are formed with thickened portions toward an interior of the thermal management component (2), and the thickened portions constitute the reinforcing structure (21).

15. The preparation method according to claim 12 or 13, wherein the thermal management component (2) comprises:
a first plate portion (22) having a wavy shape, for supporting the at least one layer of battery units (1); and
a second plate portion (23) having a wavy shape and being disposed opposite to the first plate portion (22),
wherein the first plate portion (22) and/or the second plate portion (23) are formed with abutting portions, the first plate portion (22) and the second plate portion (23) are abutted by the abutting portions, and the abutting portions form the reinforcing structure (21).

16. A preparation device of a battery comprising:
a battery cell preparation module for preparing a plurality of battery cells (11) arranged in an array into at least two layers of battery units (1), wherein the battery cells (11) have an arc-shaped outer wall and each layer of battery units (1) has a wavy shape; and
a thermal management component preparation module for preparing a thermal management component (2) located between the at least two layers of battery units (1), the thermal management component (2) having a wavy shape corresponding to the wavy shape of the each layer of battery units (1), the thermal management component (2) being configured for providing support to the at least one layer of battery units (1) in a gravitational direction and a first direction, the gravitational direction intersecting with the first direction,
wherein the thermal management component (2) is provided with a reinforcing structure (21) for providing further support to the at least one layer of battery units (1) in the first direction.
